# EUROPÄISCHE PATENTSCHRIFT

(11) **EP 1 274 536 B1**
(45) Veröffentlichungstag und Bekanntmachung des Hinweises auf die Patenterteilung: **18.05.2005**
(21) Anmeldenummer: 01923691.8
(22) Anmeldetag: 21.03.2001
(51) Int. Cl.: B23K 35/363

(54) **VERFAHREN ZUM LÖTEN VON BAUTEILEN AUS ALUMINIUM UNTER VERWENDUNG EINES FLUSSMITTELS**
PROCESS FOR SOLDERING PRODUCTS OF ALUMINUM USING A FLUX
PROCEDE DE SOUDER DE PRODUITS D'ALUMINIUM EN UTILISANT UN FLUX

(30) Priorität: 30.03.2000 DE 10015486
(43) Veröffentlichungstag der Anmeldung: 15.01.2003
(73) Patentinhaber: Solvay Fluor und Derivate GmbH, 30173 Hannover (DE)
(72) Erfinder: SESEKE-KOYRO, Ulrich, 30916 Isernhagen (DE); BECKER, Andreas, 29331 Lachendorf (DE); FREHSE, Joachim, 30625 Hannover (DE)
(74) Vertreter: Fischer, Reiner
(86) Internationale Anmeldenummer: PCT/EP2001/003216
(87) Internationale Veröffentlichungsnummer: WO 2001/074530

(56) Entgegenhaltungen:
- WO-A-99/48641
- JP-A- 3 114 663
- JP-A- 3 138 081
- CHEMICAL ABSTRACTS, vol. 116, no. 16, 20. April 1992 (1992-04-20) Columbus, Ohio, US; abstract no. 157041, DOKO, TAKENOBU ET AL: "Flux for vapor-phase brazing of aluminum or its alloys" XP002175959 & JP 03 099795 A (FURUKAWA ALUMINUM CO., LTD., JAPAN) 24. April 1991 (1991-04-24)
- DATABASE WPI Section Ch, Week 199123 Derwent Publications Ltd., London, GB; Class M23, AN 1991-167463 XP002175960 & JP 03 099771 A (FURUKAWA ALUMINIUM KK), 24. April 1991 (1991-04-24)
- PATENT ABSTRACTS OF JAPAN vol. 015, no. 093 (M-1089), 6. März 1991 (1991-03-06) & JP 02 307695 A (FURUKAWA ALUM CO LTD), 20. Dezember 1990 (1990-12-20)

## Beschreibung

Die Erfindung bezieht sich auf die Verwendung von Alkalifluorstannaten, insbesondere Kalium- und Cesiumfluorstannaten als Lötflußmittel oder als Bestandteil von Lötflußmitteln für Bauteile aus Aluminium und Aluminiumlegierungen sowie auf neue Flußmittel, die Kalium- bzw. Cesiumfluorstannate enthalten oder daraus bestehen.

Baugruppen (beispielsweise Kühler für Automotoren oder Wärmetauscher) können durch Verlöten (Hartlöten, "brazing") aus Aluminiumteilen oder Teilen aus Aluminiumlegierungen hergestellt werden. Hierzu werden Flußmittel auf Basis von Kaliumfluoraluminat verwendet. Die Oberfläche der miteinander zu verlötenden Bauteile wird mit diesem Flußmittel von oxidischen Anhaftungen befreit. Ein solches Verfahren wird im britischen Patent 1 438 955 offenbart. Die Herstellung entsprechender Flußmittel wird beispielsweise von Willenberg, US-A 4,428,920 und Kawase, US-A 4,279,605 beschrieben. Flußmittel, die Cesiumfluoraluminat sowie gegebenenfalls zusätzlich Kaliumfluoraluminat enthalten, eignen sich besonders gut zum Verlöten von Aluminiumlegierungen mit höherem Magnesiumgehalt, siehe Suzuki, US-A 4,670,067 und Shimizu, US-A 5,171,377. Anstelle eines Lotmetalls kann man dem Flußmittel auch ein Metall zusetzen, welches beim Löten mit dem Aluminium ein Eutektikum bildet. Solche Metalle sind beispielsweise Kupfer, Zink und Germanium, insbesondere auch Silicium.

Ganz und gar überflüssig kann die Verwendung von Lotmetall sein, wenn man bestimmte Metallfluorsilikate zusetzt, siehe die EP-A 810 057 und die WO 98/10887. In der letztgenannten Patentanmeldung wird offenbart, daß ein Lotmetall entbehrlich ist, wenn man ein Gemisch von Kaliumfluoraluminat und Kaliumfluorsilikat, in welchem das Kaliumfluorsilikat in einer Menge von 6 bis 50 Gew.-% enthalten ist, einsetzt.

Im übrigen ist es bekannt, Flußmittel einzusetzen, die Alkalimetallfluorzinkate enthalten, siehe die internationale Patentanmeldung WO 99/48641. Hier bildet sich eine, die Oberfläche gegen Korrosion schützende Zinkschicht auf den Bauteilen. Schließlich ist es aus JP-A-03 138 081 bekannt, Flußmittel in Form eines Dampfes von Kaliumzinnfluorid (KSn F₃) und Kaliumfluoraluminat (KAl F₄) für das Löten von Aluminium einzusetzen.

Aufgabe der vorliegenden Erfindung ist es, die Palette brauchbarer Flußmittel für das Aluminiumlöten und das Löten von Aluminiumlegierungen zu vergrößern. Diese Aufgabe und weitere Aufgaben werden durch die vorliegende Erfindung gelöst.

Das erfindungsgemäße Verfahren zum Löten von Bauteilen aus Aluminium oder Aluminiumlegierungen sieht vor, daß man ein Flußmittel verwendet, welches Alkalifluorstannate, vorzugsweise Kalium- und/oder Cesiumfluorstannat enthält, und wobei das Flußmittel mit einer Flächenbelegung von 2 bis 40 g/m² auf die Bauteile aufgebracht wird.

Die Erfindung wird bezüglich der bevorzugten Verwendung von Kalium- und Cesiumverbindungen weiter erläutert.

Der Begriff "Kalium- und Caesiumfluorstannate" umfaßt all jene Verbindungen, die als Kationen Kalium bzw. Caesium enthalten und als Anionen Verbindungen, die aus Zinn und Fluor aufgebaut sind, und zwar sowohl des zweiwertigen Zinns als auch des vierwertigen Zinns. Der Einfachheit halber werden in der vorliegenden Erfindung auch Fluor-Zinn-Anionen des zweiwertigen Zinns als Fluorstannate bezeichnet. Bekannt sind beispielsweise Trifluorostannate, Pentafluorodistannate, Tetrafluorostannate, bei zweiwertigem Zinn. Bei vierwertigem Zinn kennt man beispielsweise Pentafluorstannate und Hexafluorstannate. Die negativen Ladungen werden entsprechend durch Kalium- bzw. Cesium-Kationen abgesättigt. Gewünschtenfalls kann man natürlich Gemische einsetzen, sowohl was die Art der Kationen als auch was die Art der Anionen angeht.

Die Herstellung von Fluorostannaten wird in Gmelin Handbuch der Anorganischen Chemie, 8. Auflage, Band Zinn C3 beschrieben. Die Herstellung der Kaliumfluorstannate und ihrer Hydrate wird auf den Seiten 42 bis 50, der Cesiumfluorstannate auf den 143 bis 145 beschreiben.

Die Verwendung der genannten Kalium- bzw. Cesiumfluorstannate bieten beim Löten eine sehr hohe Flexibilität.

Eine Ausführungsform sieht vor, daß man ohne Zusatz von Lotmetall (beispielsweise in Form einer Plattierung auf den Bauteilen oder als dem Flux pulverförmig zugesetztes Lotmetall) lötet. Hierzu kann man beispielsweise reines Kaliumund/oder Cesiumfluorstannat einsetzen. Möglich ist auch der Einsatz eines Gemisches aus Kalium- und/oder Caesiumfluorstannat und Kalium- und/oder Cesiumfluorsilikat. Dabei liegt der Gehalt des Fluorstannats vorteilhaft im Bereich von 5 bis 95 Gew.-%, insbesondere 30 bis 70 Gew.-%.

Alternativ kann auch lotfrei gelötet werden, wenn man Flußmittelgemische einsetzt, welche Kalium- und/oder Cesiumfluorstannat und bekannte Flußmittel, insbesondere auf Basis von Kaliumfluoraluminat oder Cesiumfluoraluminat, enthalten. Auch hier kann gewünschtenfalls zusätzlich Kaliumund/oder Caesiumhexafluorsilikat enthalten sein. Sofern kein Fluorsilikat enthalten ist, liegt der Gehalt an Fluorstannat zweckmäßig im Bereich von 10 bis 90 Gew.-%, vorzugsweise 30 bis
70 Gew.-%. Ein Teil des Fluorstannats, beispielsweise ein Zehntel bis drei Drittel, können durch Kalium- und/oder Caesiumfluorsilikat ersetzt sein. Als Flußmittel zum lotfreien Löten sind auch Flußmittel brauchbar, die Kalium- und/oder Cesiumfluorstannat zusammen mit Kalium- und/oder Caesiumfluorzinkat enthalten. Der Anteil an Fluorstannat liegt vorzugsweise im Bereich von 10 bis 90 Gew.-%, vorzugsweise 30 bis 70 Gew.-%. Der Rest auf 100 Gew.-% wird dann durch das Fluorzinkat gebildet, wobei gewünschtenfalls zusätzlich auch noch Kalium- und/oder Cesiumfluoraluminat bzw. Kalium- und/oder Cesiumfluorsilikat enthalten sein können. Hier kann das Fluorsilikat wiederum einen Teile des Fluorstannats ersetzen; Anteil des Fluorzinkats kann durch die genannten Fluoraluminate ersetzt sein, beispielsweise ein Zehntel bis hin zu neun Zehntel.

Das lotfreie Löten hat anwendungstechnische Vorteile, da man den Arbeitsgang des Einbringens von Lot wegfallen lassen kann.

Natürlich kann man die Kalium- und/oder Caesiumfluorstannate auch auf konventionelle Weise beim Löten einsetzen. Beispielsweise kann man die Verbindungen gemischt mit Lotmetall einsetzen oder mit Lotmetall platierte Bauteile verwenden. Man kann die Stannate auch, wie in den US-Patenten 5,100,048 und 5,190,596 beschrieben, mit Metallen vermischt einsetzen, welche mit Aluminium ein Eutektikum beim Löten bilden.

Gewünschtenfalls kann man die Fluorstannate auch mit üblichen Flußmitteln vermischt einsetzen. Sie wirken dann einerseits als Flußmittel, andererseits bilden sie beim Löten auf der Oberfläche eine Zinnschicht, die die verlöteten Bauteile gegen Korrosion schützt. Beispielsweise kann man es bekannten Flußmitteln zusetzen, die Alkalifluoraluminat, Alkalifluorzinkat oder Gemische von Alkalifluorsilikat und Aluminiumfluorid enthalten. Alkali bedeutet hier Kalium oder Cesium. Wird nur Wert auf die Oberflächen schützende Eigenschaft des Fluorstannats gelegt, so reicht es aus, wenn im Flußmittelgemisch 30 bis 70 Gew.-% des Fluorstannats enthalten sind. Der Gehalt kann aber auch höher liegen, bis hin zu annähernd 100 Gew.-%. Bei geringem Gehalt, z. B. bis 10 Gew.-% ist möglicherweise der Oberflächenschutz weniger ausgeprägt. Brauchbar sind auch Gemische der Fluorstannate und Aluminiumfluorid.

Das Flußmittel kann, wie vorstehend beschrieben als solches ohne Zusatz von Hilfsstoffen eingesetzt werden. Anwendungsfertige Zusammensetzungen können aber neben dem Flußmittel gewünschtenfalls Hilfsstoffe umfassen. Beispielsweise können Bindemittel, Dispergiermittel oder Wasser bzw. organische Flüssigkeiten enthalten sollen.

Das Flußmittel kann als trockenes Pulver oder in einer Aufschlämmung bzw. Paste in bekannter Weise auf die zu verbindenden Bauteile aus Aluminium oder Aluminiumlegierungen aufgebracht werden. Im Fall der Trockenapplikation. Üblicherweise wird das trockene Pulver unter Ausnutzung elektrostatischer Kräfte auf die Bauteile aufgesprüht. Gemäß der zweiten erwähnten Variante wird das Flußmittel in Form einer Aufschlämmung in Wasser oder in organischen Lösungsmitteln oder auch als Paste auf die zu verbindenden Werkstoffe aufgebracht. Diese Aufschlämmungen enthalten zweckmäßig 15 bis 75 Gew.-% des Flußmittels. Außer Wasser werden auch organische Flüssigkeiten, insbesondere Alkohole, wie Methanol, Äthanol, Propanol oder Isopropanol, oder Polyole eingesetzt. Andere organische Flüssigkeiten, die verwendet werden können, sind Äther, z. B. Diäthylenglykolmonobutyläther, Ketone wie Aceton, Ester von einbasigen Alkoholen, Diolen oder Polyolen. Binder für die Anwendung als Paste ist beispielsweise Ethylcellulose. Mittels Filmbildnern, gewöhnlich handelt es sich um Polymere, die in organischen Lösemitteln wie Aceton löslich sind, können die Flußmittel auf das Bauteil aufgebracht werden. Sie ergeben nach dem Verdampfen des Lösemittels einen fest haftenden Film. Geeignete Polymere sind beispielsweise Acrylate oder Methacrylate.

Die Löttemperatur liegt im Bereich von 270 bis 580 °C. Die ausgewählte Löttemperatur ist abhängig vom verwendeten Flußmittel. Entsprechend wird das Lot oder lotbildende Metall ausgewählt. Unterhalb einer Lotmetall-Liquidustemperatur von 450 °C spricht man definitionsgemäß vom weichlöten (= "Soldering"), bei Temperatur darüber vom Hartlöten (= "Brazing"). Es gibt entsprechend niedrigschmelzende Lote und Lote, die bei mittleren oder höheren Temperaturen verwendet werden können. Zink-Aluminium-Lote beispielsweise haben einen recht niedrigen Schmelzpunkt; reines Zink-Lot wird bei 420 °C zum Löten verwendet. Andere Lote für höhere Temperaturen sind A-luminium-Silicium-Lote zur Verwendung ab 530 °C und Aluminium-Silicium-Kupfer-Lote zur Verwendung ab 575 °C. Üblicherweise lötet man bei Umgebungsdruck. Hierbei kann man das Verfahren des Flammenlötens anwenden, sowie auch das Verfahren des Ofenlötens. Insbesondere kann in Erdatmosphäre (z. B. Stickstoffatmosphäre) gelötet werden.

Ein weiterer Gegenstand sind die in den Ansprüchen angegebenen Flußmittel. Dabei sind Flußmittel, die im wesentlichen Partikel in einer Korngröße von 8 bis 20 µm aufweisen, sehr gut zur Trockenbefluxung beim erfindungsgemäßen Verlöten brauchbar. Die genannte Korngrößenangabe bezieht sich auf den mittleren Korndurchmesser für 50 % der Teilchen (X_{D50}), bestimmt durch Laserbeugung. Flußmittel, welche im wesentlichen Partikel in einem Korngrößenbereich von 3 bis 10 µm aufweisen, sind als Aufschlämmung in Wasser oder organischen Flüssigkeiten besonders gut nach dem Naßbefluxungsverfahren aufbringbar. Auch bezieht sich die Korngrößenangabe wieder auf den mittleren Korndurchmesser von 50 % der Teilchen (X_{D50}). Die gewünschten Fraktionen kann man durch Zerkleinern, Kompaktieren bzw. Absieben erhalten.

Ein weiterer Gegenstand der Erfindung sind Gemische in Form von Pulver oder einer Pulver enthaltenden Aufschlämmung oder Paste aus Kalium- und Caesiumfluorstannat, welche ebenfalls als Flußmittel für das erfindungsgemäße Verfahren brauchbar sind.

Das erfindungsgemäße Verfahren und die erfindungsgemäßen Flußmittel weisen eine Reihe von Vorteilen auf. Sie erweitern die Palette als Pulver oder Aufschlämmung bzw. Paste brauchbarer Flußmittel. Bei Zusatz von Caesiumverbindungen ist das Löten von magnesiumhaltigen Aluminiumlegierungen möglich. Die Fluorstannate können, gegebenenfalls mit zugesetztem Fluorsilikat, zum lotfreien Löten verwendet werden. Dies bringt den Vorteil der Arbeitsersparnis, außerdem wird die Oberfläche der verlöteten Bauteile vergütet. Die Fluorstannate können aber auch mit konventionellen Flußmitteln vermischt oder unter Einsatz konventioneller Lote oder Lotvorstufen verwendet werden. Dabei kann man die Eigenschaften der Fluorstannate als Flußmittel, die Eigenschaften betreffend die Bildung einer verzinnten Oberfläche (Vergütung) oder auch beide Eigenschaften ausnutzen.

Die folgenden Beispiele sollen die Erfindung weiter erläutern, ohne sie in ihrem Umfang einzuschränken.

### Beispiel 1: Herstellung von Kaliumfluorostannat

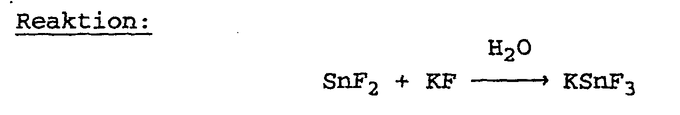

| Ansatz: 0,1 mol | |
|---|---|
| SNF₂ (99%, Aldrich) | 0,1 mol = 15,67 g |
| KF (min 99%, Riedel) | 0,1 mol = 5,81 g |
| Vollentsalztes Wasser (VE-Wasser) | ~ 50 ml |

### Durchführung:

15,67 g SNF₂ wurden in einem Kunststoffbecher vorgelegt und in 35 ml VE-Wasser gelöst (die Lösung war trübe). Die Lösung wurde auf 60 °C erwärmt. 5,81 g KF wurden in 15 ml VE-Wasser gelöst und zu der SnF₂-Lösung zudosiert Bei der Zugabe der KF-Lösung fiel ein weißer Niederschlag aus. 1,5 h lang wurde die Lösung bei 60 °C gerührt. Nach 1,5 h wurde die Heizung ausgestellt und 1 h weitergerührt. Der Ansatz wurde abgenutscht (Weißbandfilter) und der Niederschlag trockengesaugt. Der Feststoff war weiß, metallisch glänzend und wurde 3 Tage bei 75 °C getrocknet. Es handelt sich um KSn₂F₅.
Auswaage: 8,0 g (Probenbezeichnung: AB001901)

### Beispiel 2: Herstellung von Kaliumfluorostannat durch Filtratfällung

Das Filtrat des Beispiels 1 wurde mit ungefähr 100 ml I-sopronpanol versetzt, worauf eine sofortige Nachfällung eintrat. Nach 3 Tagen wurde der Niederschlag über einem Weißbandfilter abgenutscht und trockengesaugt. Der weiße, metallisch glänzende Feststoff wurde 3 Tage bei 75°C getrocknet. Es handelt sich um ein Gemisch von KSn₂F₅ und KSnF₃. (Bestimmt durch Vergleich bekannter Röntgenbeugungsdaten).
Auswaage: 7,7 g (Probenbezeichnung: AB001902)

| DTA (Differential Thermo Analysis): | | |
|---|---|---|
| AB001901 | 351,5 °C | |
| AB001902 | Onset 252,2 | Max/Min 266,4 °C |

### Beispiel 3: Löttest auf Aluminium

Winkel aus Aluminium 3003, Basisplatte aus 3003. Eine definierte Menge an Kaliumkomplex wurde mittels einiger Tropfen Isopropanol auf der Basisplatte (25 x 25 mm) verrieben, mit einem Winkel belegt (30°, 40 mm lang) und bei ca. 200 °C vorgetrocknet. Dieses Ensemble wurde dann in einem unter N₂-Schutzgas befindlichen Laborofen einer Wärmebehandlung (200 - 605 °C) unterzogen, entsprechend dem bekannten Nocolok CAB (controlled atmosphere brazing). Ergebnisse sind in der Tabelle 1 dargestellt.

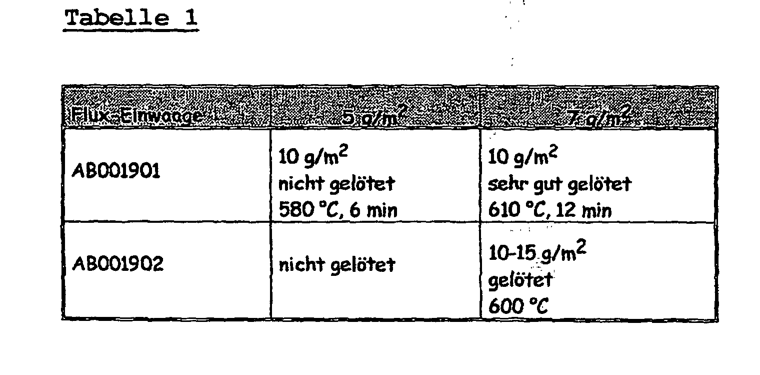

### Beispiel 4: Herstellung von Cesiumfluorostannat

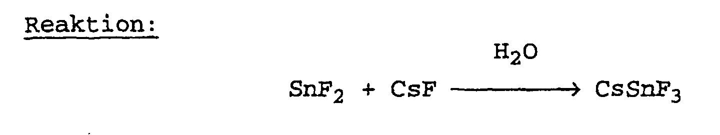

| Ansatz: 0,1 mol | |
|---|---|
| SnF₂ (99%, Aldrich) | 0,1 mol = 15,67 g |
| CsF (99,8%, Chempur) | 0,1 mol = 15,19 g |
| (VE-Wasser) | ~ 50 ml |

### Durchführung:

15,67 g SnF₂ wurden in einem Kunststoffbecher vorgelegt und in 35 ml VE-Wasser gelöst (die Lösung war trübe). Die Lösung wurde auf 60 °C erwärmt. 15,19 g CsF wurden in 15 ml VE-Wasser gelöst und zu der SnF₂-Lösung zudosiert. 1,5 h lang wurde die Lösung bei 60 °C gerührt. Nach 1,5 h wurde die Heizung ausgestellt und 1 h weitergerührt (keine Fällung). Der Ansatz wurde 3 Tage in den Ofen gestellt und das VE-Wasser bei 80 °C abgedampft.
Auswaage: 30,88 g (Probenbezeichnung AB001802)

### Analyseergebnisse:

DTA: 533,3 °C

### Beispiel 5: Löttest auf Aluminium

Winkel aus Aluminium 3003, Basisplatte aus 3003. Eine definierte Menge an Cesiumkomplex wurde mittels einiger Tropfen Isopropanol auf der Basisplatte (25 x 25 mm) verrieben, mit einem Winkel belegt (30°, 40 mm lang) und bei ca. 200 °C vorgetrocknet. Dieses Ensemble wurde dann in einem unter N2-Schutzgas befindlichen Laborofen einer Wärmebehandlung (200 - 605 °C) unterzogen, entsprechend dem bekannten Nocolok CAB (controlled atmosphere brazing). Ergebnisse (auch mit anderen Al-Legierungen) sind in der Tabelle 2 dargestellt.

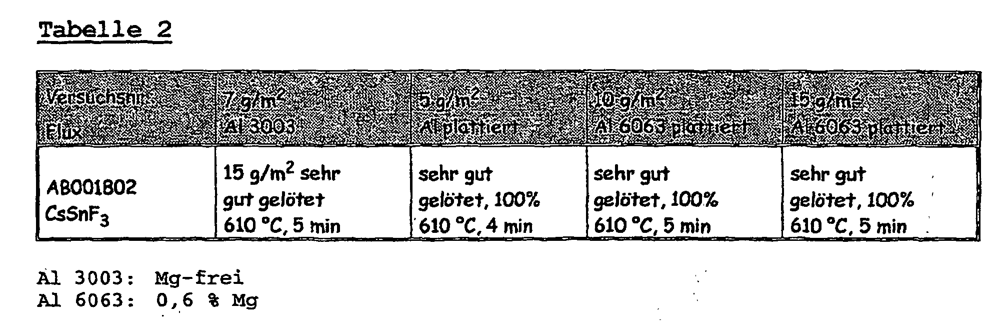

## Patentansprüche

1. Verfahren zum Löten von Bauteilen aus Aluminium oder Aluminiumlegierungen, wobei man ein Flußmittel verwendet, welches Alkalifluorstannat, vorzugsweise Kalium- und/oder Cesiumfluorstannat enthält, und wobei das Flußmittel mit einer Flächenbelegung von 2 bis 40 g/m² gemäß dem Verfahren der Trockenbefluxung oder gemäß dem Naßbefluxungsverfahren auf die Bauteile aufgebracht wird.

2. Verfahren nach Anspruch 1 zum lotfreien Löten, **dadurch gekennzeichnet, daß** man ein Flußmittel verwendet, welches eine effektive Menge an Kalium- und/oder Cesiumfluorstannat sowie gegebenenfalls zusätzlich Kalium- und/oder Cesiumfluorsilikat enthält.

3. Verfahren nach Anspruch 1, **dadurch gekennzeichnet, daß** man ein Flußmittel verwendet, welches zusätzlich Kaliumund/oder Cesiumfluoraluminat enthält.

4. Verfahren nach Anspruch 1, **dadurch gekennzeichnet, daß** man ein Flußmittel verwendet, welches zusätzlich Kaliumund/oder Cesiumfluorzinkat enthält.

5. Verfahren nach Anspruch 1, **dadurch gekennzeichnet, daß** das verwendete Flußmittel 5 bis 100 Gew.-% Kaliumund/oder Cesiumfluorstannat, 0 bis 95 Gew.-% Kalium- und/oder Cesiumhexafluorsilikat, 0 bis 95 Gew.-% Kaliumfluoraluminat und/oder Cesiumfluoraluminat und 0 bis 95 Gew.-% Kaliumund/oder Cesiumfluorzinkat enthält.

6. Verfahren nach Anspruch 1, **dadurch gekennzeichnet, daß** das Flußmittel im wesentlichen Partikel in einem Korngrößenbereich von 8 bis 20 µm (mittlerer Korndurchmesser, X_{D50}) aufweist und gemäß dem Verfahren der Trockenbefluxung auf die zu verlötenden Bauteile aufgebracht wird.

7. Verfahren nach Anspruch 1, **dadurch gekennzeichnet, daß** das Flußmittel im wesentlichen Partikel in einem Korngrößenbereich von 3 bis 10 µm (mittlerer Korndurchmesser, X_{D50}) aufweist und als Aufschlämmung in Wasser oder organischen Flüssigkeiten gemäß dem Naßbefluxungsverfahren aufgebracht wird.

8. Verfahren nach Anspruch 1, **dadurch gekennzeichnet, daß** man das Löten im Bereich von 270 bis 580 °C durchführt.

9. Flußmittel, enthaltend oder bestehend aus 5 bis 95 Gew.-% Kalium- und/oder Cesiumfluorstannat, 0, bis 95 Gew.-% Kalium- und/oder Cesiumhexafluorsilikat, 0 bis 95 Gew.-% Kalium- und/oder Cesiumfluoraluminat und 0 bis 95 Gew.-% Kalium- und/oder Cesiumfluorzinkat,
wobei das Flußmittel im wesentlichen Partikel in einem Korngrößenbereich von 8 bis 20 µm (mittlerer Korndurchmesser, X_{D50}) aufweist oder wobei das Flußmittel im wesentlichen Partikel in einem Korngrößenbereich von 3 bis 10 µm (mittlerer Korndurchmesser, X_{D50}) aufweist.

10. Flußmittel in Form von Pulver oder einer Pulver enthaltenden Aufschlämmung oder Paste, enthaltend oder bestehend aus 5 bis 95 Gew.-% Kalium- und/oder Cesiumfluorstannat, 0, bis 95 Gew.-% Kalium- und/oder Cesiumhexafluorsilikat, 0 bis 95 Gew.-% Kalium- und/oder Cesiumfluoraluminat und 0 bis 95 Gew.-% Kalium- und/oder Cesiumfluorzinkat,
welches zusätzlich Lotmetall; mit Aluminium eine Lotlegierung bildendes Metallpulver wie Silicium, Germanium, Zink oder Kupfer; Bindemittel, Wasser, organische Flüssigkeiten oder einen Gehalt an Aluminiumfluorid im Bereich von 1 bis 30 Gew.-% aufweist.

## Claims

1. Process to solder aluminium or aluminium alloy components, in which a flux containing alkali fluorostannate, preferably potassium and/or caesium fluorostannate is used and where the flux is applied to the component with a layer thickness of 2 to 40 g/m² according to the dry fluxing process or according to the wet fluxing process.

2. Process according to Claim 1 for solder-free soldering,
**characterized in that**
a flux is used which contains an effective quantity of potassium and/or caesium fluorostannate and, if necessary, additional potassium and/or caesium fluorosilicate.

3. Process according to Claim 1,
**characterized in that**
a flux is used which contains additional potassium and/or caesium fluoroaluminate.

4. Process according to Claim 1,
**characterized in that**
a flux is used which contains additional potassium and/or caesium fluorozincate.

5. Process according to Claim 1,
**characterized in that**
the flux that is used contains 5 to 100% by weight potassium and/or caesium fluorostannate, 0 to 95% by weight potassium and/or caesium hexafluorosilicate, 0 to 95% by weight potassium fluoroaluminate and/or caesium fluoroaluminate and 0 to 95% by weight potassium and/or caesium fluorozincate.

6. Process according to Claim 1,
**characterized in that**
the flux essentially contains particles with a size range of 8 to 20µm (average particle size, x_{D50}) and is applied to the component to be soldered according to the dry fluxing process.

7. Process according to Claim 1,
**characterized in that**
the flux essentially contains particles with a size range of 3 to 10µm (average particle size, x_{D50}) and is applied as a suspension in water or organic liquids according to the wet fluxing process.

8. Process according to Claim 1,
**characterized in that**
the soldering is performed in a temperature range of 270 to 580°C.

9. Flux containing or consisting of 5 to 95% by weight potassium and/or caesium fluorostannate, 0 to 95% by weight potassium and/or caesium hexafluorosilicate, 0 to 95% by weight potassium and/or caesium fluoroaluminate and 0 to 95% by weight potassium and/or caesium fluorozincate,
where the flux essentially contains particles with a size range of 8 to 20µm (average particle size, x_{D50}) or the flux essentially contains particles with a size range of 3 to 10µm (average particle size, x_{D50}).

10. Flux in the form of powder or a suspension or paste containing powder, containing or consisting of 5 to 95% by weight potassium and/or caesium fluorostannate, 0 to 95% by weight potassium and/or caesium hexafluorosilicate, 0 to 95% by weight potassium and/or caesium fluoroaluminate and 0 to 95% by weight potassium and/or caesium fluorozincate, which also contains additional soldering metal; which, with aluminium contains a solder alloy forming metallic powder such as silicon, germanium, zinc or copper; which contains binding agent, water, organic liquids or a concentration of aluminium fluoride in a range of 1 to 30% by weight.

## Revendications

1. Procédé pour souder des pièces en aluminium ou en alliages d'aluminium, dans lequel on utilise un fondant qui contient du fluorostannate alcalin, de préférence du fluorostannate de potassium et/ou de césium, et dans lequel le fondant est appliqué sur les pièces avec un recouvrement de surface de 2 à 40 g/m², selon le procédé d'application d'un flux par voie sèche, ou selon le procédé d'application d'un flux par voie humide.

2. Procédé selon la revendication 1 pour souder sans alliage d'apport, **caractérisé en ce que** l'on utilise un fondant qui contient une quantité efficace de fluorostannate de potassium et/ou de césium ainsi qu'éventuellement en plus du fluorosilicate de potassium et/ou de césium.

3. Procédé selon la revendication 1, **caractérisé en ce que** l'on utilise un fondant qui contient de plus du fluoroaluminate de potassium et/ou de césium.

4. Procédé selon la revendication 1, **caractérisé en ce que** l'on utilise un fondant qui contient de plus du fluorozincate de potassium et/ou de césium.

5. Procédé selon la revendication 1, **caractérisé en ce que** le fondant utilisé contient 5 à 100 % en poids de fluorostannate de potassium et/ou de césium, 0 à 95 % en poids d'hexa-fluorosilicate de potassium et/ou de césium, 0 à 95 % en poids de fluoroaluminate de potassium et/ou de césium et 0 à 95 % en poids de fluorozincate de potassium et/ou de césium.

6. Procédé selon la revendication 1, **caractérisé en ce que** le fondant présente essentiellement des particules entrant dans une gamme de grosseurs de grains comprise entre 8 et 20 µm (diamètre moyen des grains, X_{D50}) et est appliqué sur les pièces à souder selon le procédé d'application d'un flux par voie sèche.

7. Procédé selon la revendication 1, **caractérisé en ce que** le fondant présente essentiellement des particules entrant dans une gamme de grosseurs de grains comprise entre 3 et 10 µm (diamètre moyen des grains, X_{D50}) et est appliqué sous forme d'une suspension dans l'eau ou de liquides organiques selon le procédé d'application d'un flux par voie humide.

8. Procédé selon la revendication 1, **caractérisé en ce que** l'on exécute la soudure dans une gamme de températures de 270 à 580 °C.

9. Fondant contenant ou composé de 5 à 95 % en poids de fluorostannate de potassium et/ou de césium, 0 à 95 % en poids d'hexafluorosilicate de potassium et/ou de césium, 0 à 95 % en poids de fluoroaluminate de potassium et/ou de césium et 0 à 95 % en poids de fluorozincate de potassium et/ou de césium, qui présente essentiellement des particules entrant dans une gamme de grosseurs de grains comprise entre 8 et 20 µm (diamètre moyen des grains, X_{D50}) ou qui présente essentiellement des particules entrant dans une gamme de grosseurs de grains comprise entre 3 et 10 µm (diamètre moyen des grains, X_{D50}).

10. Fondant, sous la forme d'une poudre ou d'une suspension ou pâte contenant une poudre, contenant ou composé de 5 à 95 % en poids de fluorostannate de potassium et/ou de césium, 0 à 95 % en poids d'hexafluorosilicate de potassium et/ou de césium, 0 à 95 % en poids de fluoroaluminate de potassium et/ou de césium et 0 à 95 % en poids de fluorozincate de potassium et/ou de césium, qui présente de plus un métal à souder, une poudre métallique formant un alliage de brasage avec l'aluminium, telle que de silicium, de germanium, de zinc ou de cuivre ; un liant, de l'eau, des liquides organiques ou une teneur en fluorure d'aluminium dans la gamme allant de 1 à 30 % en poids.
